# EUROPÄISCHE PATENTSCHRIFT

(11) **EP 3 676 898 B1**
(45) Veröffentlichungstag und Bekanntmachung des Hinweises auf die Patenterteilung: **21.07.2021**
(21) Anmeldenummer: 18756422.4
(22) Anmeldetag: 17.08.2018
(51) Int. Cl.: H01M 8/04858, H01M 8/043, H01M 8/04537, H01M 8/04992, B60L 50/70, B60L 50/75, B60L 58/30, B60L 58/40

(54) **VERFAHREN ZUM SCHUTZ VON EINZELZELLEN, BRENNSTOFFZELLENSYSTEM UND KRAFTFAHRZEUG**
METHOD FOR PROTECTING SINGLE CELLS, FUEL CELL SYSTEM AND MOTOR VEHICLE
PROCÉDÉ DE PROTECTION DE PILES INDIVIDUELLES, SYSTEME DE PILES À COMBUSTIBLE ET VÉHICULE AUTOMOBILE

(30) Priorität: 28.08.2017 DE 102017214974
(43) Veröffentlichungstag der Anmeldung: 08.07.2020
(73) Patentinhaber: Audi AG, 85045 Ingolstadt (DE); VOLKSWAGEN AG, 38440 Wolfsburg (DE)
(72) Erfinder: HEINRICH, Harald, 38100 Braunschweig (DE); SCHRÖDER, Christian, 38100 Braunschweig (DE)
(86) Internationale Anmeldenummer: PCT/EP2018/072325
(87) Internationale Veröffentlichungsnummer: WO 2019/042793

(56) Entgegenhaltungen:
- EP-A1- 2 806 489
- DE-A1-102013 014 959
- US-A1- 2008 032 163
- US-A1- 2015 221 966
- US-A1- 2016 141 905

## Beschreibung

Die Erfindung betrifft Verfahren zum Schutz von Einzelzellen eines Brennstoffzellenstapels vor schädigenden elektrochemischen Prozessen, ein Brennstoffzellensystem eingerichtet zur Durchführung wenigstens eines der Verfahren und ein Kraftfahrzeug.

Ein Brennstoffzellenfahrzeug beschreibt ein Fahrzeug, welches zum Großteil durch ein Brennstoffzellensystem betrieben wird. Optional kann auch eine Batterie das Brennstoffzellensystem unterstützen um einen Elektromotor mit Energie zu versorgen, der wiederum ein Drehmoment zum Fahrzeugantrieb generiert. Als Brennstoffzelle des Brennstoffzellensystems kommen jegliche Konfigurationen, wie zum Beispiel PEM (Polymer Elektrolyt Membran), SOFC (Festoxidbrennstoffzelle, englisch: solid oxide fuel cell) oder andere in Betracht.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für *membrane electrode assembly*), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (Brennstoffzellenstapel) angeordneter MEAs gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Ein Problem derartiger Brennstoffzellen sind die (Spannungs-) Degradation und Alterung, im Zuge welcher die Katalysatorbeladung verringert wird. Zur Lösung des Problems wurde bisher die Katalysatorbeladung, also die vorgehaltene Menge des Katalysators, so hoch gewählt, dass auch bei einer Degradation und Alterung die zu erreichende Lebensdauer der Brennstoffzelle gewährleistet wurde. Dies führt jedoch zu einer Verteuerung der Brennstoffzelle. Gleichzeitig kann es aber auch dazu kommen, dass bei Brennstoffzellen, welche aufgrund von außergewöhnlichen Umgebungs- und Betriebsbedingungen eine erhöhte Degradation und Alterung erfahren, dennoch nicht die zu erreichende Lebensdauer gewährleistet ist.

DE 10 2013 108 067 A1 offenbart ein Verfahren, bei welchem die Spannung von jeder der Brennstoffzellen oder einer Gruppe von Zellen in dem Brennstoffzellenstapel und das Bestimmen einer mittleren Zellspannung der Brennstoffzellen in dem Brennstoffzellenstapel durchgeführt wird. Das Verfahren bestimmt, ob die mittlere Zellspannung der Brennstoffzellen in dem Brennstoffzellenstapel unter einen vorbestimmten Spannungswert gefallen ist, und wenn dies der Fall ist, legt das Verfahren ein Spannungspotential an den Brennstoffzellenstapel an, um die mittlere Zellspannung über den vorbestimmten Spannungswert zu erhalten. Somit wird eine Stapelwechselbelastung des Brennstoffzellenstapels während eines Stand-by-Betriebs begrenzt.

DE 11 2005 003 300 B4 beschreibt ein Brennstoffzellensystem und Verfahren zur Reduzierung eines Spannungsverlusts, der durch eine Spannungswechselbelastung bewirkt wird, durch Verwendung einer wiederaufladbaren elektrischen Speichervorrichtung. Gemäß dem Verfahren wird verhindert, dass eine Ausgansspannung der Brennstoffzellen des Brennstoffzellenstapels über eine Spannungspotentialschwelle geht, bei der Platinkatalysatorpartikel in den MEAs der verschiedenen Brennstoffzellen in dem Stapel oxidieren. Das Spannungspotential, oberhalb dessen die Partikel zu oxidieren beginnen kann etwa 0,8 V betragen. Wenn die Anforderung an den Brennstoffzellenstapel niedrig genug ist, um zu bewirken, dass das Spannungspotential die Oxidationsschwelle überschreitet, wird bewirkt, dass der Brennstoffzellenstapel mit einer ergänzenden Leistungsquelle elektrisch gekoppelt wird, um die Leistungsquelle (zum Beispiel eine wiederaufladbare Batterie oder ein Ultrakondensator) als eine Last wiederaufzuladen.

Dazu ist jedoch typischerweise eine Einzelzellspannungserfassung notwendig, wie zum Beispiel in DE 10 2015 118 972 A1 offenbart, was ein aufwendiges und teures Messsystem darstellt. Nachteile entstehen insbesondere durch erhöhten Bauraumbedarf, höhere Komplexität, beispielsweise durch eine hohe Anzahl an Verkabelungen sowie aufwendige Signalverarbeitung auf Seiten der Messeinrichtung, als auch der Auswerteeinheit. Die Einzelzellspannungserfassung stellt ein aufwendiges und teures Messsystem dar.

Ferner ist aus der DE 10 2013 014 959 A1 bekannt, anhand einer Spannung des Brennstoffzellenstapels und der Anzahl der darin verbauten Einzelzellen eine mittlere Einzelspannung zu ermitteln. Mittels einer elektrischen Last kann die mittlere Spannung je Einzelzelle unter einem vorgegebenem Grenzwert gehalten werden. Bei fehlender oder zu geringer Abnahme an Leistung wird ein Systembypassventil in Abhängigkeit der mittleren Spannung je Einzelzelle des Brennstoffzellenstapels gesteuert. Hierdurch kann eine aufgrund der Minimaldrehzahl eines Strömungsverdichters zwangsläufig geförderte Luftmenge zumindest teilweise durch den Systembypass und das Systembypassventil fließen. Damit gelangt auf der Kathodenseite des Brennstoffzellenstapels keine oder nur noch eine sehr viel geringere Luftmenge an. Hierdurch wird die mittlere Spannung je Einzelzelle entsprechend begrenzt, sodass den die Brennstoffzelle schädigenden Mechanismen entgegengewirkt werden kann.

US 2016/141905 A1 ermittelt eine mittlere, maximale oder minimale Einzelzellspannung für die Spannungsregelung eines Brennstoffzellensystems.

US 2008/0032163 A1 offenbart, eine Spannungsüberwachung eines Brennstoffzellenstapels vorzunehmen, indem die Einzelzellenspannung einzelner Zellen oder sämtlicher Zellen bestimmt wird.

US 2015/0221966 A1 lehrt, einen Brennstoffzellenstapel so zu konstruieren, dass dieser neben gewöhnlichen Zellen (ordinary cells) eine oder mehrere Monitorzellen (monitor cells) aufweist. Letztere zeichnen sich durch einen erhöhten Wasserstoffdruckverlust gegenüber den Normalzellen aus, was beispielsweise durch eine bewusst konstruierte verengte Anodenzufuhrleitung erreicht werden kann. Im Betrieb wird dann die Einzelzellenspannung dieser Monitorzellen überwacht und der Brennstoffzellenstapel entsprechend dieser Spannung gesteuert.

Ein nicht beanspruchtes Verfahren umfasst die folgenden Schritte:
- Bereitstellen einer vorbestimmten Spannungs-Obergrenze einer Einzelzelle, welche zum Schutz der Einzelzellen vor den schädigenden elektrochemischen Prozessen nicht überschritten werden soll, einer Pufferspannung und einer Anzahl aller Einzelzellen des Brennstoffzellenstapels;
- Bestimmen einer Gesamtspannung des Brennstoffzellenstapels;
- Bestimmen einer mittleren Einzelzellspannung der Einzelzellen mittels der Gesamtspannung und der Anzahl der Einzelzellen;
- Begrenzen der mittleren Einzelzellspannung auf die um die Pufferspannung verringerte Spannungs-Obergrenze.

Durch das Verfahren wird der Schutz des Brennstoffzellenstapels vor schädigenden elektrochemischen Prozessen bei einer zyklischen Veränderung der Einzelzellspannungen zwischen der Spannungs-Obergrenze (insbesondere 0,85 Volt (V)) und einer Ruhespannung erreicht. Bei Begrenzung der maximalen Einzelzellspannung auf die Spannungs-Obergrenze können diese schädigenden Prozesse stark gehemmt werden, was die Auslegung der Brennstoffzelle (der Einzelzellen und des Brennstoffzellenstapels) hin zu kleinerer Katalysatorbeladung vereinfacht sowie grundsätzlich die Lebensdauer der Brennstoffzelle erhöht.

Die Spannungserfassung erfolgt nun nicht mittels einer aufwändigen Einzelzellspannungserfassung, sondern über den gesamten Brennstoffzellenstapel. Dafür ist in einem Brennstoffzellensystem die notwendige Sensorik bereits vorhanden und es wird somit keine zusätzliche Messeinrichtung benötigt. Die mittlere Einzelzellspannung ergibt sich typischerweise durch die Division der Gesamtspannung des Brennstoffzellenstapels durch die Anzahl der Einzelzellen (Zellanzahl) des Brennstoffzellenstapels. Das Verfahren baut auf der Erkenntnis auf, dass ein Nachteil dieses Vorgehens darin besteht, dass eine Einzelzelle über der Spannungs-Obergrenze liegen kann, der berechnete Mittelwert (also die mittlere Einzelzellspannung) jedoch noch darunter liegt, da alle anderen Einzelzellspannungen noch darunter liegen. Aus diesem Grund wird in dem Verfahren vorgeschlagen, eine Pufferspannung (einen Pufferbereich) zu applizieren, der die vorbestimmte Spannungs-Obergrenze weiter reduziert. Damit kann sichergestellt werden, dass in der Regel alle Einzelzellspannungen unterhalb der Spannungs-Obergrenze liegen. Die Pufferspannung dient somit als Puffer zwischen der Spannungsobergrenze und der mittleren Einzelzellspannung. Das Bereitstellen der Pufferspannung kann erfolgen, indem eine vorbestimmte Pufferspannung bereitgestellt wird, oder indem die Pufferspannung während des Verfahrens zunächst ermittelt, zum Beispiel berechnet wird.

Die Spannungs-Obergrenze, welche einen veranschlagten oberen Grenzwert für die Einzelzellspannung darstellt, kann durch einfach durchzuführende Versuche vorab festgestellt werden. Beispielsweise können Versuche durchgeführt werden, um zu bestimmen, oberhalb welcher Einzelzellspannung ein Katalysator der Einzelzellen oder ein Träger des Katalysators oxidiert. Vorzugsweise ist die vorbestimmte Spannungs-Obergrenze jene Spannung, über welcher ein Katalysator oder ein Träger des Katalysators der Einzelzellen oxidiert. Durch eine solche Festlegung der Spannungs-Obergrenze wird eine Oxidation des Katalysators oder dessen Trägers und somit eine Verringerung des Katalysators effektiv verhindert. Die Spannungs-Obergrenze beträgt bevorzugt zwischen 0,8 V) und 0,9 V, vorzugsweise zwischen 0,83 und 0,87 V, insbesondere 0,85 V.

Vorzugsweise ist vorgesehen, dass das Begrenzen der mittleren Einzelzellspannung auf die um die Pufferspannung verringerte Spannungs-Obergrenze folgende Schritte umfasst:
- Bestimmen ob die mittleren Einzelzellspannung größer als die um die Pufferspannung verringerte Spannungs-Obergrenze ist; und
- Wenn dies zutrifft, Reduzieren der mittleren Einzelzellspannung bis dies nicht mehr zutrifft. Die Mittlere Einzelzellspannung wird typischerweise reduziert und/oder begrenzt, indem die Gesamtspannung des Brennstoffzellenstapels reduziert und/oder begrenzt wird. Somit ist eine einfache Regelstrategie gegeben.

Bevorzugt ist vorgesehen, dass das Bestimmen ob die mittleren Einzelzellspannung größer als die um die Pufferspannung verringerte Spannungs-Obergrenze ist, folgende Schritte umfasst:
- Bestimmen einer verringerten Spannungs-Obergrenze mittels Subtrahierens einer Pufferspannung von der Spannungs-Obergrenze; und
- Vergleichen der verringerten Spannungs-Obergrenze mit der mittleren Einzelzellspannung; oder
- Bestimmen einer erhöhten Einzelzellspannung mittels Addierens der Pufferspannung zu der mittleren Einzelzellspannung;
- Vergleichen der vorbestimmten Spannungs-Obergrenze mit der erhöhten Einzelzellspannung.

Die Pufferspannung kann somit entweder von der Spannungs-Obergrenze subtrahiert oder zur mittleren Einzelzellspannung addiert werden.

Gemäß einer bevorzugten Ausgestaltung des Verfahrens ist vorgesehen, dass die Pufferspannung (pro Einzelzelle) zwischen 0,01 V und 0,15 V, insbesondere 0,05 V beträgt. Diese Pufferspannung ist eine Pufferspannung je Einzelzelle. Als äquivalent kann jedoch auch angesehen werden, dass eine Gesamtpufferspannung mittels Multiplikation der Anzahl der Einzelzellen des Brennstoffzellenstapels mit der (Einzelzell-)Pufferspannung bestimmt wird.

Diese Gesamtpufferspannung kann dann auf die Gesamtspannung angewendet werden. Dies kann derart erfolgen, dass die Gesamtspannung des Brennstoffzellenstapels auf die um die Gesamtpufferspannung verringerte Gesamtspannungs-Obergrenze begrenzt wird, wobei sich die Gesamtspannungsobergrenze durch Multiplikation der Spannungs-Obergrenze je Einzelzelle mit der Anzahl aller Einzelzellen ergibt.. Die Einzelzell-Pufferspannung (Pufferspannung je Einzelzelle) kann anhand von Messdaten im Laborbetrieb des Brennstoffzellensystems ermittelt werden. Dazu wird eine Einzelzellspannungserfassung genutzt, um im stationären und dynamischen Systembetrieb die Standardabweichung der Einzelzellspannungen zu bestimmen. Die Einzelzell-Pufferspannung wird vorzugsweise größer der Standardabweichung gewählt, um das systemimmanente Rauschen der Einzelzellspannungen zu berücksichtigen. Im Fahrzeugeinsatz ohne zusätzliche Einzelzellspannungserfassung kann damit mit hoher Wahrscheinlichkeit ein Überschreiten der Spannungs-Obergrenze verhindert werden.

Vorzugsweise ist vorgesehen, dass das Begrenzen der mittleren Einzelzellspannung mittels einer Erhöhung einer aus dem Brennstoffzellenstapel entnommenen Stromstärke oder einer Verringerung wenigstens eines dem Brennstoffzellenstapel zugeführten Reaktanten erfolgt. Je niedriger die aus dem Brennstoffzellenstapel entnommene Stromstärke ist, umso höher ist die von dem Brennstoffzellenstapel bereitgestellte Spannung. Somit stellt das zusätzliche Entnehmen von Strom eine effektive Maßnahme zum Senken der Spannung des Brennstoffzellenstapels und somit der mittleren Einzelzellspannung dar. Der dabei aus der Brennstoffzelle entnommene Strom kann insbesondere in einem elektrischen Energiespeicher, zum Beispiel einem Akkumulator oder einem Kondensator gespeichert werden. Alternativ oder auch zusätzlich kann mittels der Reaktanten die Spannung gesenkt werden, z. B. indem eine Kathodenseitige Luftzufuhr zum Brennstoffzellenstapel unterbunden wird.

Der Erfindung liegt nun die Aufgabe zugrunde, die genannten Verfahren weiter zu verbessern.

Diese Aufgabe wird durch ein Verfahren zum Schutz von Einzelzellen eines Brennstoffzellenstapels vor schädigenden elektrochemischen Prozessen gelöst. Das Verfahren wird mit den folgenden Schritten zur Verfügung gestellt:
- Bereitstellen einer vorbestimmten Spannungs-Obergrenze einer Einzelzelle, welche zum Schutz der Einzelzellen vor den schädigenden elektrochemischen Prozessen nicht überschritten werden soll;
- Bestimmen wenigstens einer Einzelzellspannung, wobei die wenigstens eine Einzelzellspannung nur von wenigstens einer ausgewählten, vorbestimmten Einzelzelle des Brennstoffzellenstapels bestimmt wird, welche bezüglich der schädigenden elektrochemischen Prozesse kritischer als die übrigen Einzelzellen ist; und
- Begrenzen der wenigstens einen Einzelzellspannung auf die Spannungs-Obergrenze.

Dadurch, dass nur von kritischen Einzelzellen des Brennstoffzellenstapels die Einzelzellspannung bestimmt, also nur die kritischen Einzelzellen überwacht werden, kann auf eine aufwändige Einzelzellspannungserfassung aller Einzelzellen verzichtet werden. Anstatt dessen werden lediglich eine oder wenige, kritische Einzelzellspannungen überwacht. Welche Einzelzellen bezüglich der schädigenden elektrochemischen Prozesse kritischer als die übrigen Einzelzellen sind, kann vorab einfach festgestellt werden, beispielsweise durch einen Dauerlaufversuch des Brennstoffzellenstapels und anschließende Bestimmung der Katalysatorschichtdicken der Einzelzellen. Es sind solche Einzelzellen kritisch beziehungsweise kritischer als die übrigen Einzelzellen, welche nach einer vorgegebenen Versuchszeit eine höhere (Spannungs-) Degradation oder Alterung aufweisen als die übrigen Einzelzellen. Durch die Erkenntnis, welche Einzelzellen kritischer als die übrigen Einzelzellen sind, können vorab die kritischen Einzelzellen mit einer Einzelzellspannungserfassung versehen werde, während die übrigen Einzelzellen keine Einzelzellspannungserfassung aufweisen. Dass die wenigstens eine Einzelzellspannung nur von wenigstens einer ausgewählten, vorbestimmten Einzelzelle bestimmt wird, bedeutet im Sinne der Erfindung dass die Einzelzellspannung oder die Einzelzellspannungen nicht von allen Einzelzellen, sondern lediglich von wenigstens einer vorab bestimmten Einzelzelle bestimmt wird oder werden, wobei die maximale Anzahl der vorab bestimmten Einzelzellen kleiner als die (Gesamt-) Anzahl der Einzelzellen des Brennstoffzellenstapels ist. Durch das Verfahren wird bei geringen zusätzlichen Kosten für die Einzelzell-Spannungserfassung der am gefährdetsten Zellen eine sehr hohe Genauigkeit erreicht.

Das Begrenzen der wenigstens einen Einzelzellspannung auf die Spannungs-Obergrenze kann wiederum folgende Schritte umfassen, durch welche ein einfaches Regelverfahren gegeben ist:
- Bestimmen ob die Einzelzellspannung größer als die vorbestimmte Spannungs-Obergrenze ist.
- Wenn die Einzelzellspannung die vorbestimmte Spannungs-Obergrenze überschreitet, Reduzieren der Einzelzellspannung bis dies nicht mehr zutrifft.

Ferner erfolgt das Begrenzen und/oder Reduzieren der wenigstens einen Einzelzellspannung insbesondere mittels eines Begrenzens der Gesamtspannung.

Erfindungsgemäß ist vorgesehen, dass die wenigstens eine Einzelzellspannung nur von wenigstens einer Einzelzelle des Brennstoffzellenstapels bestimmt wird, welche an eine Endzelle des Brennstoffzellenstapels angrenzt. Mit anderen Worten wird erfindungsgemäß nur die zweite und/oder vorletzte Einzelzellspannung des Brennstoffzellenstapels überwacht. Dadurch, dass diese Zellen an Endzellen des Brennstoffzellenstapels angrenzen, werden diese situativ mit einem höheren Gasvolumenstrom durchströmt. Dies ist beispielsweise der Fall, sobald in den Endzellen aufgrund Kondensation und Verflüssigung von Wasser Strömungskanäle blockiert werden. Damit steigt der Strömungswiderstand der Endzelle und folglich fließt in die benachbarten Zellen ein leicht erhöhter Gasvolumenstrom. Dieser Zusammenhang führt zu einer Erhöhung der Einzelzellspannung in unter anderem der zweiten sowie vorletzten Einzelzelle des Brennstoffzellenstapels.

In einem nicht beanspruchten Beispiel ist vorgesehen, dass von dem mittlerem Drittel der Einzelzellen des Brennstoffzellenstapels, insbesondere von den mittleren drei Fünfteln des Brennstoffzellenstapels keine Einzelzellspannungen bestimmt werden. Somit wird auf eine Einzelzellspannungsermittlung des mittleren Drittels oder der mittleren drei Fünftel der Einzelzellen verzichtet, wodurch der dafür ansonsten notwendige Aufwand reduziert wird.

Vorzugsweise ist vorgesehen, dass das Begrenzen der Einzelzellspannung mittels einer Erhöhung einer aus dem Brennstoffzellenstapel entnommenen Stromstärke oder einer Verringerung wenigstens eines dem Brennstoffzellenstapel zugeführten Reaktanten erfolgt. Dies stellt eine einfache Möglichkeit zum Begrenzen der Einzelzellspannung dar, ohne dass einem typischerweise verwendetem Brennstoffzellensystem weitere Komponenten hinzugefügt werden müssten.

Ferner wird ein Brennstoffzellensystem, welches zur Durchführung des erfindungsgemäßen Verfahrens eingerichtet ist, zur Verfügung gestellt. Das Verfahren kann mittels Standardkomponenten eines typischen Brennstoffzellensystems umgesetzt werden, wobei die einzelnen Verfahrensschritte von einem Steuergerät des Brennstoffzellensystems verwirklicht werden. Zur Bestimmung der Gesamtspannung oder der Einzelzellspannungen umfasst das Brennstoffzellensystem insbesondere eine entsprechend eingerichtete Spannungserfassung.

Das Brennstoffzellensystem weist eine Einzelspannungserfassung von der zweiten und/oder vorletzten Einzelzelle des Brennstoffzellenstapels auf. In einem nicht beanspruchten Beispiel weist das Brennstoffzellensystem aber keine Einzelspannungserfassung des mittleren Drittels, insbesondere der mittleren drei Fünftel der Einzelzellen des Brennstoffzellenstapels auf. Somit werden nur die kritischen äußeren Einzelzellen mittels einer Einzelspannungserfassung überwacht, wodurch der Aufwand für die Einzelspannungserfassung der Mittleren Einzelzellen entfällt.

Insbesondere sind die vorgestellten Verfahren und das Brennstoffzellensystem für mobile Anwendungen geeignet. Somit wird auch ein Kraftfahrzeug umfassend das Brennstoffzellensystem zur Verfügung gestellt, welches ebenfalls die genannten Vorteile aufweist. Das Brennstoffzellensystem dient als Energiequelle für einen elektrischen Antriebsmotor des Kraftfahrzeugs. Ein solches Kraftfahrzeug wird auch als Brennstoffzellenfahrzeug bezeichnet.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Brennstoffzellenstapels gemäß einer bevorzugten Ausgestaltung;
- Figur 2: einen Verfahrensablauf gemäß eines nicht beanspruchten Beispiels; und
- Figur 3: einen Verfahrensablauf gemäß einer bevorzugten Ausgestaltung der Erfindung.

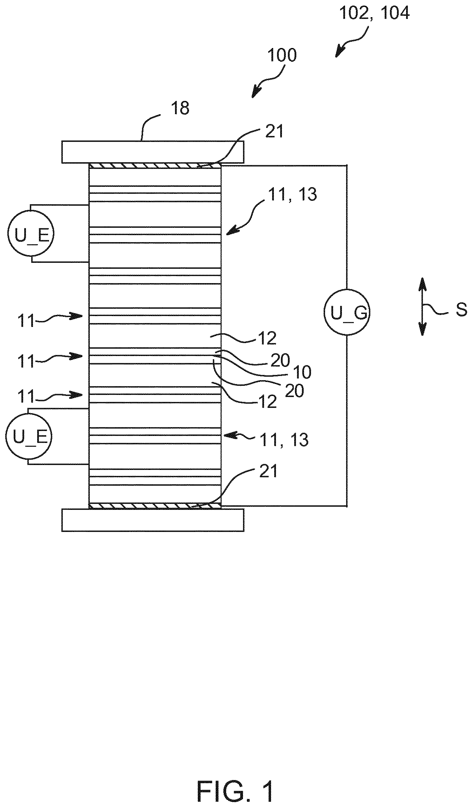

Figur 1 zeigt in einer schematischen Darstellung einen insgesamt mit 100 bezeichneten Brennstoffzellenstapel gemäß einer bevorzugten Ausgestaltung der vorliegenden Erfindung.

Der Brennstoffzellenstapel 100 kann ein Teil eines nicht weiter dargestellten Brennstoffzellensystems 102 sein, welches wiederum ein Teil eines nicht dargestellten Fahrzeugs 104 sein kann. Das Fahrzeug ist ein Elektrofahrzeug, welches einen Elektrotraktionsmotor aufweist, der durch den Brennstoffzellenstapel 100 mit elektrischer Energie versorgt wird.

Der Brennstoffzellenstapel 100 umfasst eine Vielzahl von abwechselnd, an deren Flachseiten aneinandergereihten (gestapelten) Membran-Elektroden-Anordnungen 10 und Polarplatten 12. Insgesamt bilden also mehrere gestapelte Einzelzellen 11 den Brennstoffzellenstapel 100, wobei sowohl eine der Einzelzellen 11, als auch der Brennstoffzellenstapel 100 allgemein als Brennstoffzelle bezeichnet werden können.

Die Polarplatten 12 können als Bipolarplatten ausgebildet sein, sofern sie zwischen Membran-Elektroden-Anordnungen 10 angeordnet sind. Die zwei Polarplatten 12, welche zwischen Membran-Elektroden-Anordnungen 10 und Endplatten 18 des Brennstoffzellenstapels 100 angeordnet sind, werden Monopolarplatten genannt. Zwischen den Polarplatten 12 und den jeweiligen Membran-Elektroden-Anordnungen 10 sind Katalysatoren 20 angeordnet, welche von umlaufenden Dichtungen (nicht dargestellt) umschlossen werden. Unter anderem, um die Dichtfunktion der Dichtungen herzustellen, wird der Brennstoffzellenstapel 100 in der Stapelrichtung S mittels länglicher Zugkörper 22 zusammengepresst (verpresst).

Zwischen den Endplatten und Monopolarplatten befinden sich Stromsammler 21, über welche der Stromfluss aus oder in den Brennstoffzellenstapel 100 hergestellt wird.

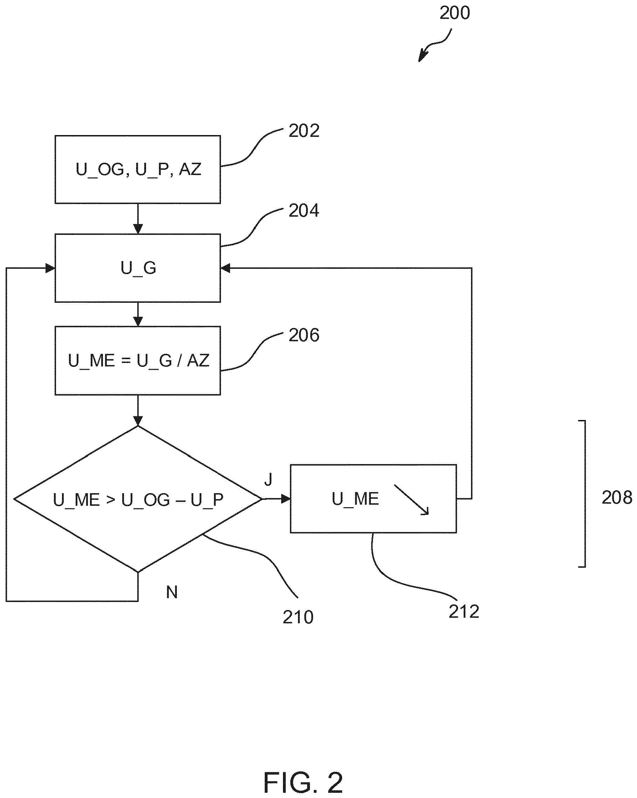

Figur 2 zeigt Verfahrensablauf gemäß eines nicht beanspruchten Beispiels. Das Verfahren dient zum Schutz der Einzelzellen 11 eines Brennstoffzellenstapels 100 vor schädigenden elektrochemischen Prozessen.

Zunächst wird dem Verfahren 200 in einem Schritt 202 eine vorbestimmten Spannungs-Obergrenze U_OG einer Einzelzelle 11, welche zum Schutz der Einzelzellen 11 vor den schädigenden elektrochemischen Prozessen nicht überschritten werden soll zur Verfügung gestellt. Die Spannungs-Obergrenze U_OG kann in Versuchen festgestellt werden, indem beobachtet wird, oberhalb welcher Spannung es zu einer Oxidation eines Katalysators 20 (typischerweise Platin) oder eines Trägers (typischerweise Kohlenstoff) des Katalysators 20 der Einzelzellen 11 kommt. Die Spannungsobergrenze beträgt beispielsweise 0,85 V (Volt).

Im Schritt 202 werden dem Verfahren 200 auch noch die Anzahl AZ (also die Gesamtanzahl) der Einzelzellen 11 des Brennstoffzellenstapels 100 und eine Pufferspannung U_P zur Verfügung gestellt. Die Pufferspannung U_P kann beispielsweise in Abhängigkeit der Einzelzellen 11 bestimmt werde, wobei die Pufferspannung U_P mit zunehmender Anzahl AZ der Einzelzellen 11 steigen kann. Im Extremfall, bei lediglich einer einzigen Einzelzelle 11 wäre die Pufferspannung gleich 0, wobei dieser Fall im Rahmen des Beispiels nicht eintreten kann,

da die Zellanzahl in dem Brennstoffzellenstapel 100 stets größer als eins ist. Somit ist die Pufferspannung größer als 0. Die einzelnen Parameter U_OG, U_P und AZ können auch zu unterschiedlichen Zeitpunkten dem Verfahren 200 bereitgestellt werden.

In einem Schritt 204 erfolgt das Bestimmen, typischerweise Messen, einer Gesamtspannung U_G aller Einzelzellen 11 des Brennstoffzellenstapels 100. Die Gesamtspannung U_G wird typischerweise ohnehin gemessen. Die Spannungsmessung erfolgt dabei über alle in Serie geschalteten Einzelzellen 11 - siehe Figur 1.

In einem anschließenden Schritt 206 erfolgt das Bestimmen einer mittleren Einzelzellspannung U_ME der Einzelzellen 11 mittels der Gesamtspannung U_G und einer Anzahl AZ der Einzelzellen 11 des Brennstoffzellenstapels 100 durch Dividieren der Gesamtspannung U_G durch die Anzahl AZ.

In einem nächsten Schritt folgt ein Begrenzen 208 der mittleren Einzelzellspannung U_ME auf die um die Pufferspannung U_P verringerte Spannungs-Obergrenze U_OG. Das Begrenzen der mittleren Einzelzellspannung U_ME auf die um die Pufferspannung U_P verringerte Spannungs-Obergrenze U_OG erfolgt dann, wenn dies notwendig ist, also z. B. im Leerlauf der Brennstoffzelle, da die Spannungs-Obergrenze U_OG ansonsten nicht erreicht wird.

Das Begrenzen 208 der mittleren Einzelzellspannung U_ME auf die um die Pufferspannung U_P verringerte Spannungs-Obergrenze U_OG kann in Schritten 210 und 212 erfolgen. Zunächst erfolgt ein Bestimmen 210 ob die mittleren Einzelzellspannung U_ME größer als die um die Pufferspannung U_P verringerte Spannungs-Obergrenze U_OG ist. Nur wenn dies der Fall ist, erfolgt ein Reduzieren 212 der mittleren Einzelzellspannung U_ME bis dies nicht mehr zutrifft und das Verfahren 200 anschließend mit Schritt 204 fortgeführt. Wenn dies nicht der Fall ist, so wird das Verfahren mit Schritt 204 fortgesetzt. Die Pufferspannung U_P sollte dabei so groß gewählt werden, dass ein im Zuge des Schritts 210 vorkommendes Überschreiten der um die Pufferspannung U_P reduzierten Spannungs-Obergrenze U_OG die Lebensdauer der Einzelzellen 11 nicht negativ beeinflusst. Eine solche Pufferspannung U_P könnte beispielsweise 0,05 V betragen. In der Praxis kann die Pufferspannung U_P auf Einzelzellebene oder auf Stapelebene angewendet werden. Beispielsweise kann die Spannungs-Obergrenze U_OG je Einzelzelle 11 um die Pufferspannung U_P je Einzelzelle reduziert werden, oder es kann auch eine Gesamtspannungs-Obergrenze (Spannungs-Obergrenze U_OG je Einzelzelle 11 multipliziert mit der Anzahl AZ) um eine Gesamt-Pufferspannung (Pufferspannung U_P je Einzelzelle 11 multipliziert mit der Anzahl AZ) reduziert werden, welche folgend nicht überschritten werden sollte oder darf. Dazu kann ein Bestimmen erfolgen, ob die Gesamtspannung U_G größer als die um die Gesamt-Pufferspannung verringerte Gesamtspannungs-Obergrenze ist. Nur wenn dies der Fall ist, erfolgt ein Reduzieren der Gesamtspannung U_G bis dies nicht mehr zutrifft Beide Varianten sind als äquivalent anzusehen.

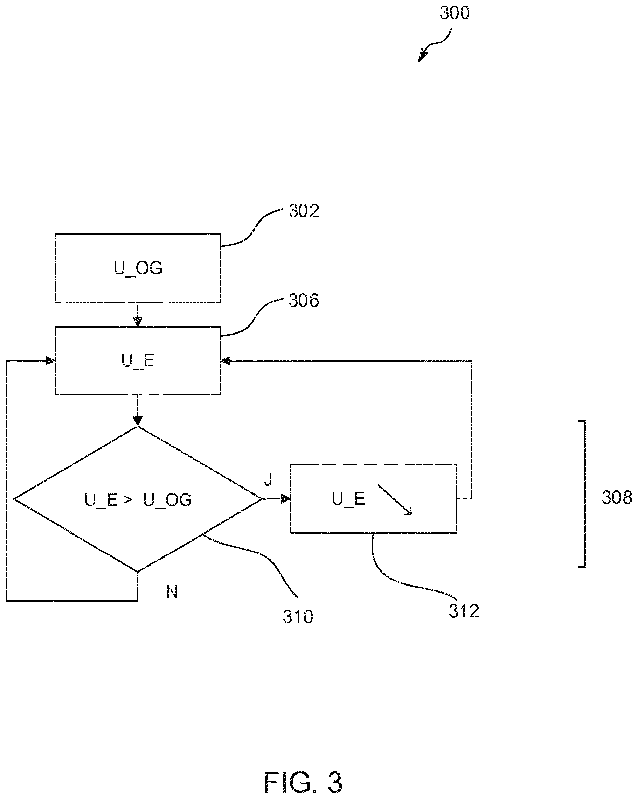

In Figur 3 ist ein erfindungsgemäßes Verfahren 300 zum Schutz von Einzelzellen 11 eines Brennstoffzellenstapels 100 vor schädigenden elektrochemischen Prozessen dargestellt.

Das Verfahren 300 umfasst wieder ein Bereitstellen 302 der vorbestimmten Spannungs-Obergrenze U_OG einer Einzelzelle 11, welche zum Schutz der Einzelzellen 11 vor den schädigenden elektrochemischen Prozessen nicht überschritten werden soll.

Im Unterschied zum in Figur 2 gezeigten Verfahren erfolgt nun ein Bestimmen 306 wenigstens einer Einzelzellspannung U_E, wobei die wenigstens eine Einzelzellspannung U_E nur von ausgewählten Einzelzellen 11 bestimmt wird. Diese Einzelzellen 11 sind vorbestimmte Einzelzellen 11 des Brennstoffzellenstapels 100, welche bezüglich der schädigenden elektrochemischen Prozesse kritischer als die übrigen Einzelzellen 11 sind. Es werden somit nicht alle Einzelzellen 11 des Brennstoffzellenstapels 100 überwacht, sondern lediglich jene Einzelzellen, welche bezüglich einer Überschreitung der Spannungs-Obergrenze U_OG am gefährdetsten sind. Am gefährdetsten sind erfindungsgemäß die zweite sowie vorletzte im Brennstoffzellenstapel 100 angeordneten Einzelzellen 11, da diese direkt an den Endeinzelzellen 13 anliegen, welche am schnellsten Abkühlen und eine damit verbundene Kondensation im Brennstoffzellenstapel 100 an diesen Endzellen 13 am schnellsten eintritt. In der Folge erhöht sich der Gasvolumenstrom in der zweiten sowie vorletzten Einzelzelle.

Im Anschluss erfolgt ein Begrenzen 308 der wenigstens einen Einzelzellspannung U_E auf die Spannungs-Obergrenze U_OG. Dies kann mittels eines Schritts 310 erfolgen, in welchem überprüft wird, ob die wenigstens eine bestimmte Einzelzellspannung U_E größer als die Spannungs-Obergrenze U_OG ist. Wenn dies der Fall ist, dann wird die Einzelzellspannung U_E so lange reduziert, bis dies nicht mehr zutrifft und das Verfahren anschließend mit Schritt 306 fortgeführt. Wenn dies nicht der Fall ist, so wird das Verfahren gleich mit Schritt 306 fortgesetzt.

Durch das Verfahren wird bei geringen zusätzlichen Kosten für die wenigen Einzelzellspannungserfassungen der am gefährdetsten Zellen eine sehr hohe Genauigkeit erreicht.

Somit wird ermöglicht, im mittleren Bereich des Brennstoffzellenstapels 100 keine Einzelzell-Spannungsüberwachung durchführen zu müssen.

### Bezugszeichenliste

- 10: Membran-Elektroden-Anordnung
- 11: Einzelzelle
- 12: Polarplatte
- 13: Endzelle
- 18: Endplatte
- 20: Katalysator
- 21: Stromsammler
- 22: länglicher Zugkörper

- 100: Brennstoffzellenstapel
- 102: Brennstoffzellensystem
- 104: Kraftfahrzeug

- S: Stapelrichtung
- U_G: Gesamtspannung
- U_P: Pufferspannung
- U_OG: Spannungs-Obergrenze
- U_E: Einzelzellspannung

- 200: Verfahren zum Schutz von Einzelzellen
- 202: Bereitstellen der Spannungs-Obergrenze, Pufferspannung und Anzahl
- 204: Bestimmen der Gesamtspannung
- 206: Bestimmen der mittleren Einzelzellspannung
- 208: Begrenzen der mittleren Einzelzellspannung
- 210: Bestimmen ob die mittleren Einzelzellspannung größer als die um die Pufferspannung verringerte Spannungs-Obergrenze ist
- 212: Reduzieren der mittleren Einzelzellspannung

- 300: Verfahren zum Schutz von Einzelzellen
- 302: Bereitstellen der Spannungs-Obergrenze
- 306: Bestimmen der Einzelzellspannung
- 308: Begrenzen der Einzelzellspannung
- 310: Bestimmen ob die Einzelzellspannung größer als die Spannungs-Obergrenze ist.
- 312: Reduzieren der Einzelzellspannung

## Patentansprüche

1. Verfahren (300) zum Schutz von Einzelzellen (11) eines Brennstoffzellenstapels (100) vor schädigenden elektrochemischen Prozessen, umfassend die folgenden Schritte:
- Bereitstellen (302) einer vorbestimmten Spannungs-Obergrenze (U_OG) einer Einzelzelle (11), welche zum Schutz der Einzelzellen (11) vor den schädigenden elektrochemischen Prozessen nicht überschritten werden soll;
- Bestimmen (306) wenigstens einer Einzelzellspannung (U_E), wobei die wenigstens eine Einzelzellspannung (U_E) nur von wenigstens einer ausgewählten, vorbestimmten Einzelzelle (11) des Brennstoffzellenstapels (100) bestimmt wird, welche bezüglich der schädigenden elektrochemischen Prozesse kritischer als die übrigen Einzelzellen (11) ist; und
- Begrenzen (308) der wenigstens einen Einzelzellspannung (U_E) auf die Spannungs-Obergrenze (U_OG);
**dadurch gekennzeichnet, dass** die wenigstens eine Einzelzellspannung (U_E) nur von wenigstens einer Einzelzelle (11) des Brennstoffzellenstapels (100) bestimmt wird, welche an eine Endzelle (13) des Brennstoffzellenstapels (100) angrenzt, nämlich der zweiten und/oder der vorletzten Einzelzelle (11) des Brennstoffzellenstapels (100).

2. Verfahren (300) nach Anspruch 1, **dadurch gekennzeichnet, dass** die vorbestimmte Spannungs-Obergrenze (U_OG) jene Spannung ist, über welcher ein Katalysator (20) oder Träger des Katalysators (20) der Einzelzellen (11) oxidiert.

3. Verfahren nach einem der vorhergehenden Ansprüche, **dadurch gekennzeichnet, dass** die Spannungs-Obergrenze (U_OG) zwischen 0,8 V und 0,9 V, vorzugsweise zwischen 0,83 und 0,87 V, insbesondere 0,85 V beträgt.

4. Brennstoffzellensystem (102) eingerichtet zur Durchführung wenigstens eines der Verfahren nach einem der Ansprüche 1 bis 3.

5. Kraftfahrzeug (104) umfassend das Brennstoffzellensystem (100) nach Anspruch 4.

## Claims

1. A method (300) for protecting single cells (11) of a fuel cell stack (100) from damaging electrochemical processes, comprising the steps of:
- providing (302) a predetermined maximum voltage (U_OG) of a single cell (11) which should not be exceeded when protecting the single cells (11) from the damaging electrochemical processes;
- determining (306) at least one single cell voltage (U_E), wherein the at least one single cell voltage (U_E) is only determined by at least one selected, predetermined single cell (11) of the fuel cell stack (100) which is more critical that the remaining single cells (11) in terms of the damaging electrochemical processes; and
- limiting (308) the at least one single cell voltage (U_E) to the maximum voltage (U_OG);
**characterized in that** the at least one single cell voltage (U_E) is only determined by at least one single cell (11) of the fuel cell stack (100) which is adjacent to an end cell (13) of the fuel cell stack (100), meaning the second and/or the penultimate single cell (11) of the fuel cell stack (100).

2. The method (300) according to Claim 1, **characterized in that** the predetermined maximum voltage (U_OG) is the voltage above which a catalyst (20) or carrier of the catalyst (20) of the single cells (11) oxidizes.

3. The method according to any one of the preceding claims, **characterized in that** the maximum voltage (U_OG) is between 0.8 V and 0.9 V, preferably between 0.83 and 0.87 V, in particular 0.85 V.

4. A fuel cell system (102) equipped to perform at least one of the methods according to any one of Claims 1 to 3.

5. A motor vehicle (104) comprising the fuel cell system (100) according to Claim 4.

## Revendications

1. Procédé (300) de protection de piles individuelles (11) d'un empilement de piles à combustibles (100) contre des processus électrochimiques nuisibles, comprenant les étapes suivantes :
- l'établissement (302) d'une limite supérieure de tension prédéterminée (U_OG) d'une pile individuelle (11), laquelle ne doit pas être dépassée pour protéger les piles individuelles (11) des processus électrochimiques nuisibles ;
- la détermination (306) d'au moins une tension de pile individuelle (U_E), sachant que ladite tension de pile individuelle (U_E) au moins est seulement déterminée par au moins une pile individuelle (11) prédéterminée sélectionnée de l'empilement de piles à combustibles (100), laquelle est plus critique que les autres piles individuelles (11) quant aux processus électrochimiques nuisibles ; et
- la limitation (308) de ladite tension de pile individuelle (U_E) au moins à la limite supérieure de tension (U_OG) ;
**caractérisé en ce que** ladite tension de pile individuelle (U_E) au moins est seulement déterminée par au moins une pile individuelle (11) de l'empilement de piles à combustibles (100), laquelle est adjacente à une pile terminale (13) de l'empilement de piles à combustibles (100), à savoir la deuxième et/ou l'avant-dernière pile individuelle (11) de l'empilement de piles à combustibles (100).

2. Procédé (300) selon la revendication 1, **caractérisé en ce que** la limite supérieure de tension prédéterminée (U_OG) est la tension au-dessus de laquelle un catalyseur (20) ou un support de catalyseur (20) des piles individuelles (11) s'oxyde.

3. Procédé selon l'une des revendications précédentes, **caractérisé en ce que** la limite supérieure de tension (U_OG) se situe entre 0,8 V et 0,9 V, de préférence entre 0,83 et 0,87 V, notamment à 0,85 V.

4. Système de piles à combustible (102) mis en place pour exécuter au moins l'un des procédés selon l'une des revendications 1 à 3.

5. Véhicule (104) comprenant le système de piles à combustible (100) selon la revendication 4.
